# EUROPÄISCHE PATENTSCHRIFT

(11) **EP 2 335 000 B1**
(45) Veröffentlichungstag und Bekanntmachung des Hinweises auf die Patenterteilung: **06.05.2015**
(21) Anmeldenummer: 09775798.3
(22) Anmeldetag: 09.10.2009
(51) Int. Cl.: F26B 13/10, F26B 23/00, F26B 25/00, F28D 9/00, F28D 21/00, F28G 13/00, F28D 7/16

(54) **VORRICHTUNG ZUR WÄRMERÜCKGEWINNUNG AN EINER ANLAGE ZUR THERMISCHEN BEHANDLUNG VON TEXTILEN WARENBAHNEN**
DEVICE FOR RECOVERING HEAT ON A SYSTEM FOR THE THERMAL TREATMENT OF TEXTILE MATERIAL WEBS
DISPOSITIF DE RÉCUPÉRATION DE CHALEUR SUR UNE INSTALLATION DE TRAITEMENT THERMIQUE DE BANDES TEXTILES

(30) Priorität: 13.10.2008 CH 16392008
(43) Veröffentlichungstag der Anmeldung: 22.06.2011
(73) Patentinhaber: Strahm Textile Systems AG, 8574 Lengwil (CH)
(72) Erfinder: NIKLAUS, Michael, CH-8472 Seuzach (CH); PLUGACHEV, Kuzma, CH-9554 Tägerschen (CH)
(74) Vertreter: Gachnang, Hans Rudolf
(86) Internationale Anmeldenummer: PCT/CH2009/000325
(87) Internationale Veröffentlichungsnummer: WO 2010/043061

(56) Entgegenhaltungen:
- EP-A1- 0 385 372
- WO-A1-2006/021164
- DE-A1- 3 012 880
- US-A- 3 131 035
- US-A- 4 169 321
- US-A- 4 532 721
- US-A- 5 018 281

## Beschreibung

Gegenstand der Erfindung ist eine Vorrichtung zur Wärmerückgewinnung an einer Anlage zur thermischen Behandlung von textilen Warenbahnen gemäss Oberbegriff des Patentanspruchs 1.

Anlagen zur thermischen Behandlung von Warenbahnen sind bekannt. Beispielsweise werden bei der Ausrüstung von bandförmigen Textilien, wie gewebten oder gewirkten Stoffen sowie Nonwovens, welche zuvor eine Behandlung in einer Flüssigkeit durchlaufen haben, Trocknungsöfen eingesetzt, bei denen die Textilien mit heisser Luft getrocknet werden. Dazu wird trockene Frischluft aus der Umgebung aufgeheizt, dann meist im Gegenstrom zur Transportrichtung der Warenbahn durch den Trocknungsofen hindurch geblasen und die feuchte, jedoch immer noch warme Luft wieder an die Umgebung abgegeben. Bei diesem Verfahren wird eine grosse Menge an kostbarer Energie für das Aufwärmen der stets neu angesaugten Frischluft benötigt.

Es ist auch bekannt, die Abluft von Trocknungsöfen mit einem Luft/Luft Wärmetauscher abzukühlen und die mit der feuchten und heissen Abluft erwärmte trockene Frischluft dem Trocknungsofen zuzuführen. Dabei wird ein Teil der Aufheizenergie für die Frischluft eingespart. Die in dieser bekannten Anlage verwendeten, meist handelsüblichen Wärmetauscher sind sehr kompakt, das heisst sie haben kleine Abmessungen und an sich einen guten Wirkungsgrad. Der gute Wirkungsgrad wird dadurch erreicht, dass die Abluft mit hoher Geschwindigkeit an feinen Lamellen, welche in geringem Abstand von wenigen Millimetern zueinander liegen, vorbeigeführt wird. Im Weiteren führt die Abluft meist einen nicht unwesentlichen Anteil an losen Fasern, sogenannten Flusen mit, die in den feinen Zellen des Wärmetauschers hängen bleiben und sich ablagern können. Diese Ablagerungen verursachen Turbulenzen und erhöhen weiter den Luftwiderstand ganz wesentlich. Sie bewirken, dass der Wärmetauscher in recht kurzen Abständen gereinigt werden muss. Dies ist bei Wärmetauschern mit engen Kanälen äusserst schwierig und folglich aufwendig. Wird dem Wärmetauscher ein geeigneter Feinfilter vorgeschaltet, so setzt sich auch dieser sehr rasch zu und muss gereinigt werden. Die Reinigung kann nur bei stillgelegter Anlage geschehen. Durch die hohen Energiekosten für die Umwälzung der Abluft und Stillstandszeiten wird der Vorteil der Wärmerückgewinnung wesentlich reduziert oder sogar aufgehoben.

Ein weiterer Nachteil beim Einsatz kompakter Wärmetauscher besteht darin, dass zur Zu- und Abführung der Luftströme relativ lange Leitungen erforderlich sind, was wiederum zu Energieverlusten führt und/oder zusätzlichen Aufwand für die Isolierung dieser Leitungen bedingt. Schliesslich hat der Einsatz solcher konventioneller Wärmetauscher, die meistens als Kreuzstrom-Wärmetauscher ausgebildet sind, den weiteren Nachteil, dass die Luftströme zu und von jedem Wärmetauscher mehrfach umgelenkt werden müssen, wodurch wiederum der Energiebedarf für die Förderung der Luft ansteigt.

DE 3012880 A1 offenbart eine Vorrichtung nach dem Oberbegriff des Anspruchs 1.

Eine Aufgabe der vorliegenden Erfindung besteht nun darin, eine Vorrichtung zur Wärmerückgewinnung mit hohem thermischem Wirkungsgrad zu schaffen, bei der der Druckabfall im Wärmetauscher so gering als möglich gehalten werden kann, um den Aufwand an elektrischer Energie für die Überwindung des Druckabfalls im Wärmetauscher so niedrig wie möglich zu halten und die Neigung zu Verstopfen, beispielsweise mit Flusen, zu verringern.

Gelöst wird diese Aufgabe durch eine Vorrichtung zur Wärmerückgewinnung gemäss den Merkmalen des Patentanspruchs 1.

Durch eine von den bekannten Wärmetauschern völlig abweichende Wahl der Querschnitte der Kanäle mit 50 bis 200mm minimalem Abstand der Kanalwände können Turbulenzen, ausgelöst durch abgelagerte Flusen, minmiert und dadurch elektrische Energie eingespart werden. Bei Kanälen mit Wandabständen unter 50mm überlappen sich die entlang den Kanalwänden durch Ablagerungen erzeugten Turbulenzen derart, dass der gesamte Luftwiderstand nicht nur der Summe der beiden durch die Turbulenzen entlang der Wände hervorgerufenen Widerstand beträgt, sondern sich dieser zusätzlich durch die Überlappung der Turbulenzbereiche erhöht. Versuche haben ergeben, dass bei einem Abstand der Kanalwände von mehr als 50mm bis vorzugsweise gegen 200mm wohl Luftwiderstände durch Verwirbelung entlang der Kanalwände nicht zu vermeiden sind, jedoch höchstens die Summe der beiden Turbulenzbereiche wirksam ist. Durch diese Massnahme fällt folglich der Gesamtwiderstand durch Flusenablagerung.

Diese erfindungsgemässe Lösung hat weiter den Vorteil, dass durch die Ausnutzung des für den Wärmetauscher zur Verfügung stehenden Platzes entlang der Anlage nicht nur der Querschnitt der Kanäle im Vergleich zu den aus dem Stand der Technik bekannten Wärmetauschern bei etwa gleicher Wärmetauschfläche wesentlich vergrössert werden kann, wodurch der Luftwiderstand und damit der Druckabfall im Wärmetauscher auf eine vernachlässigbare Grösse reduziert wird, sondern kleinere und leistungsschwächere sowie kostengünstigere Ventilatoren eingesetzt werden können. Durch den Verlauf der Kanäle des Wärmetauschers längs der Anlage sind zudem weniger Umlenkungen der Luftströme notwendig als beim Einsatz konventioneller Wärmetauscher, was den Luftwiderstand und Druckabfall weiter reduziert. Im Weiteren kann das Absetzen von Flusen im Wärmetauscher dank stets fast laminarer Strömung im wesentlichen verhindert werden. Sollten sich dennoch einzelne Fasern oder Faserbüschel in den Kanälen absetzen, können diese mit geringem Aufwand aus dem Wärmetauscher herausgeführt werden.

Durch die optimale Ausnutzung des für den Wärmetauscher oberhalb der Anlage zur Verfügung stehenden Raums können die Verbindungsrohre zwischen der Anlage und dem Wärmetauscher auf ein absolutes Minimum reduziert werden, insbesondere wenn der Wärmetauscher direkt über dem jeweiligen Ein- bzw. Auslassstutzen liegt. Dadurch vermindert sich der Druckabfall im Gesamtsystem der Anlage und des Wärmetauschers zusätzlich.

Wenn der Wärmetauscher und die Anlage im Wesentlichen gleiche Grundrissmasse haben, kann die Bauhöhe eines direkt auf der Anlage angeordneten und sich über dessen Länge erstreckenden Wärmetauschers wesentlich geringer als diejenige eines konventionellen Wärmetauschers ausfallen.

Durch eine direkte Nachbarschaft des Wärmetauschers und der Anlage kann der Wärmeverlust zusätzlich reduziert werden, da die Verbindungsleitungen entfallen und auch der Wärmetauscher mit einer optimalen Isolation versehen werden kann. Die Isolation des Wärmetauschers kann auf einfache Weise aufgebracht werden. Die Verkleidung bzw. Isolation von Verbindungsrohren entfällt im wesentlichen vollständig.

Die Erfindung betrifft auch ein Verfahren zum Reinigen der Vorrichtung von in den Kanälen des Wärmetauschers abgesetzten Fasern und/oder Partikeln.

Vorteilhafte Ausführungen der Vorrichtung werden in den abhängigen Ansprüchen umschrieben.

Die Erfindung wird anhand eines illustrierten Ausführungsbeispiels näher erläutert. Es zeigen:
- Fig. 1: eine schematische perspektivische Darstellung einer als Trocknungsofen ausgebildeten Anlage mit darauf aufgesetztem Wärmetauscher,
- Fig. 2: eine Aufsicht auf den Wärmetauscher mit darunter liegendem Trocknungsofen,
- Fig. 3: eine Seitenansicht des Wärmetauschers, Trocknungsofen nur angedeutet,
- Fig. 4: eine stirnseitige Ansicht des Wärmetauschers,
- Fig. 5: eine perspektivische Darstellung der Untersicht des Wärmetauschers mit Anschlussrohren,
- Fig. 6: eine perspektivische Detailansicht des eingangsseitigen Endes des Wärmetauschers,
- Fig. 7: ein Schema zur Veranschaulichung eines Betriebsverfahrens der erfindungsgemässen Anlage.

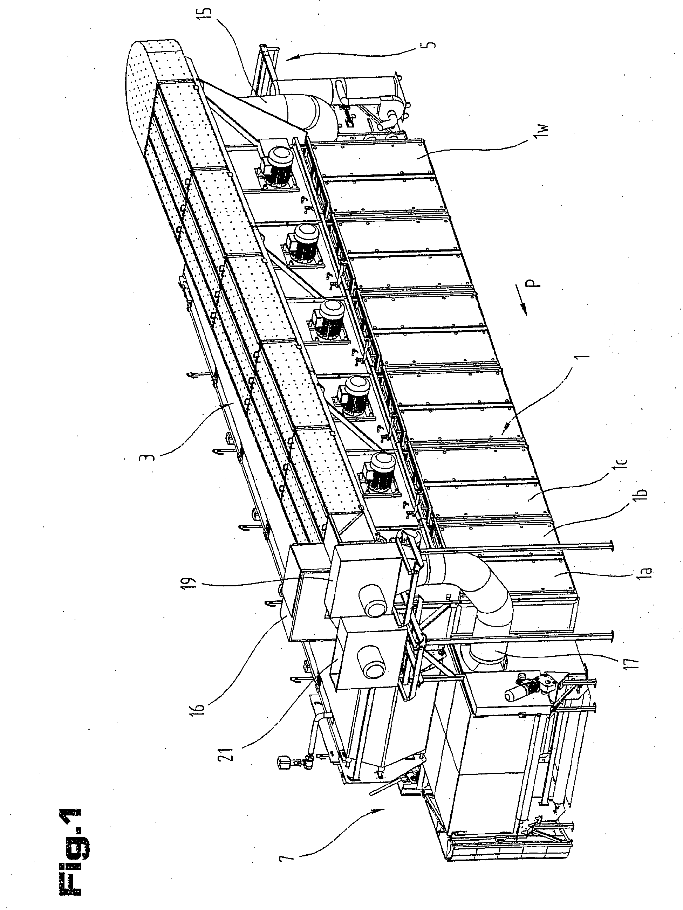

In der Übersichtsdarstellung gemäss Figur 1 einer Trocknungsanlage für textile Warenbahnen ist mit Bezugszeichen 1 der Trocknungsofen und mit Bezugsziffer 3 der Wärmetauscher bezeichnet. Mit Pfeil P ist der Materialfluss, das heisst die Richtung in der die textile Warenbahn durch den Trockenofen 1 geführt wird, dargestellt. Der Einlauf der Warenbahn erfolgt an der Stelle 5; der Auslauf an der Stelle 7. Der Trocknungsofen 1 kann in eine Mehrzahl von Kammern 1a bis 1n unterteilt sein. Trocknungsöfen dieser Gattung sind bekannt, beispielsweise aus der EP 1 642 073 A1.

Trocknungsöfen der genannten Gattung weisen, um eine hohe Durchsatzleistung zu erreichen, meist eine grosse Länge von beispielsweise 15 bis 25 Metern auf. Auch die Breite des Trocknungsofens 1 kann mehrere Meter betragen, da auch Warenbahnen grosser Breite verarbeitet werden müssen. Diese viele Quadratmeter grosse Grundfläche des Trocknungsofens 1 bildet die Auflagefläche für die erfindungsgemässe Wärmerückgewinnungsvorrichtung.

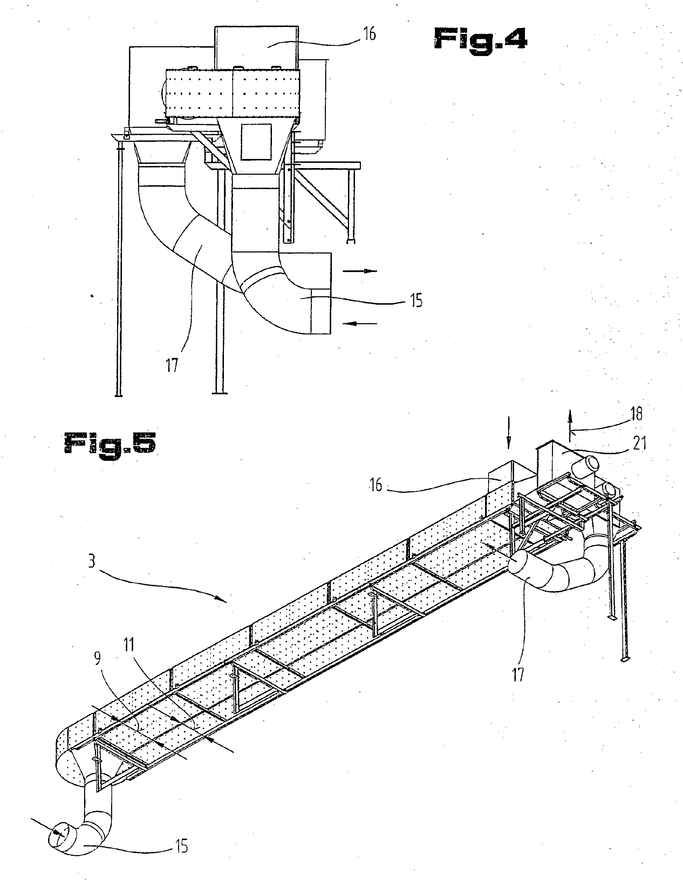

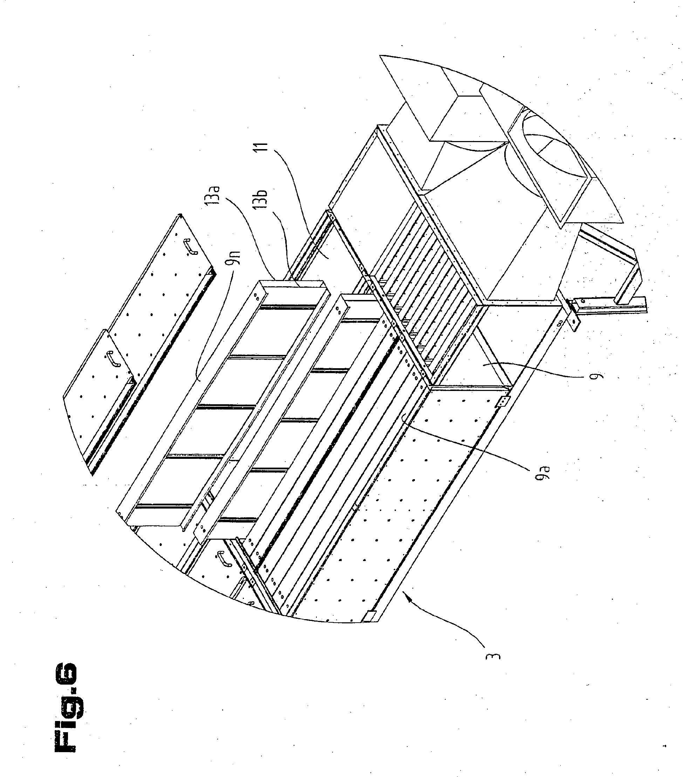

Die Vorrichtung umfasst einen Wärmetauscher 3 mit mindestens zwei sich über die gesamte Länge des Trocknungsofens 1 oder vorzugsweise darüber hinaus erstreckende Kanäle 9a bis 9n (siehe Fig. 6). Die Kanäle 9a bis 9n sind kassettenartig aufgebaut, das heisst deren seitliche Wände 13a und 13b grenzen jeweils an den benachbarten Kanal. Die Kanäle 9a bis 9n sind im vorliegend beschriebenen Beispiel als hochkantstehende Kassetten ausgebildet, welche zudem vertikal aus dem Hauptkanal herausgezogen und so auf einfache Weise gereinigt werden können. Abwechslungsweise sind die Kanäle auf der Einlaufseite 5 der Materialbahn der Anlage mit der feuchten heissen Abluft, die über ein Heissluftrohr 15 den Trocknungsofen 1 verlässt, verbunden. Die dazwischen liegenden Kanalabschnitte sind mit der Frischluftzufuhr 16 verbunden, in welcher ein Frischluftfilter eingebaut sein kann. Die Frischluft wird von einem ersten Ventilator 19 aus der Umgebung angesaugt und in die Kanäle eingeblasen. Die heisse Abluft, welche durch das Heissluftrohr 15 in die dazu parallel verlaufenden Kanäle einfliesst, wird von einem zweiten Ventilator 21 in Gegenrichtung angesaugt und dann nach Durchquerung des Kanals an die Umgebung abgegeben, wie dies durch den Pfeil 18 in Figur 5 angedeutet ist. Durch die zuströmende verhältnismässig kalte Frischluft wird die Abluft abgekühlt und die Frischluft entsprechend aufgewärmt, bevor sie auf der Seite des Materialauslaufs 7 dem Trocknungsofen 1 durch das Frischluftrohr 17 zugeführt wird. Die Heizleistung des Trocknungsofens 1 kann dadurch wesentlich verringert werden. Um die nun im Gegenstrom erwärmte Frischluft auf der Auslaufseite 7 des Trocknungsofens 1 in diesen einführen zu können, wird sie durch den Kanal 11 zurückgeführt. Im Kanal 11 erfolgt ausschliesslich die Rückführung. Es findet kein weiterer Wärmeaustausch statt.

Die Breite der Kanäle 9a bis 9n in horizontaler Richtung gemessen beträgt 50 bis 200 mm, vorzugsweise 60 bis 120 mm. Die Höhe der Kanäle kann ein Vielfaches betragen und hängt von der für das Trocknen notwendigen Luftmenge ab.

Anhand der Figuren 1 bis 6 wurde der Wärmetauscher 3 als Kassettenwärmetauscher beschrieben, in dem die Luftströme im Gegenstrom geführt werden. Die Erfindung ist aber nicht auf eine solche Ausgestaltung des Wärmetauschers beschränkt. Viel mehr kann der Wärmetauscher auch im Gleichstrom betrieben werden und er kann beispielsweise als Rohrwärmetauscher ausgebildet sein. Dabei kann beispielsweise die aus dem Trocknungsofen 1 kommende heisse Abluft durch ein Bündel von Rohren mit jeweils einem kreisförmigen Querschnitt geführt werden, wobei das Bündel von einem grösseren, die aufzuwärmende Frischluft führenden Rohr umgeben ist, welches einen rechteckigen Querschnitt aufweist (keine Abb.).
Jede der vorangehend beschriebenen Ausführungsarten des Wärmetauschers kann einer aerodynamischen Reinigung unterzogen werden, wenn sich in den Kanälen Flusen oder andere Verunreinigungen angesammelt haben. Dabei werden die Kanäle entweder mit einer Ventilatorleistung durchgeblasen, die gegenüber der im normalen Betrieb aufgebrachten Ventilatorleistung wesentlich erhöht ist oder es werden einzelne Kanäle nacheinander verschlossen und mit normaler Ventilatorleistung durchgeblasen. Natürlich können die Varianten auch kombiniert werden, indem ausgewählte Kanäle nacheinander mit erhöhter Ventilatorleistung durchgeblasen werden.

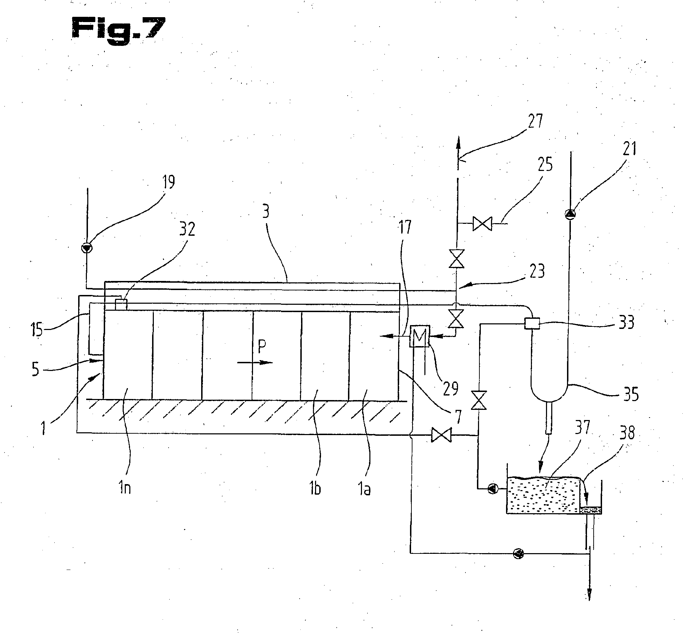

Anhand eines in Figur 7 dargestellten Schemas wird nun ein Verfahren zum Betrieb einer erfindungsgemässen Anlage zur thermischen Behandlung einer Warenbahn beschrieben. Mit der Bezugszahl 1 ist wiederum beispielhaft der Trocknungsofen bezeichnet, der in eine Mehrzahl von Kammern 1 a bis 1 n unterteilt ist. Mit Pfeil P ist der Materialfluss, das heisst die Richtung in welcher die textile Warenbahn durch den Trockenofen 1 geführt wird, dargestellt. Der oben auf dem Trocknungsofen 1 angeordnete Wärmetauscher 3 wird nach diesem Beispiel wie folgt als Gleichstromwärmetauscher betrieben. Kalte trockene Frischluft wird durch den Ventilator 19 aus der Umgebung angesaugt und durch den Wärmetauscher 3 gefordert. Nach dem Durchlauf durch den Wärmetauscher 3 gelangt die nun aufgeheizte trockene Frischluft zu einer Verzweigung 23, von wo aus, wie nachfolgend beschrieben, der ganze Luftstrom oder Teilströme davon weiter geleitet wird bzw. werden. Mindestens ein Teil der aus dem Wärmetauscher 3 austretenden, heissen und trockenen Frischluft wird in der Figur nach unten durch das Frischluftrohr 17 wie vorangehend beschrieben dem Trocknungsofen 1 zugeführt. Der andere Weg der Abzweigung 23, in der Figur nach oben, führt entweder über eine Leitung 25 zu einem Wärmeverbraucher, beispielsweise einem Fernwärmenetz oder wird als Abluft ins Freie geblasen, wie dies durch den Pfeil 27 angedeutet ist. Die beschriebene Verwendung von Teilströmen der heissen Frischluft, beispielsweise zur Einspeisung in ein Fernwärmenetz, bedingt natürlich, dass aus dem Wärmetauscher 3 mehr heisse Frischluft austritt, als der Trocknungsofen 1 in der aktuellen Betriebssituation benötigt.

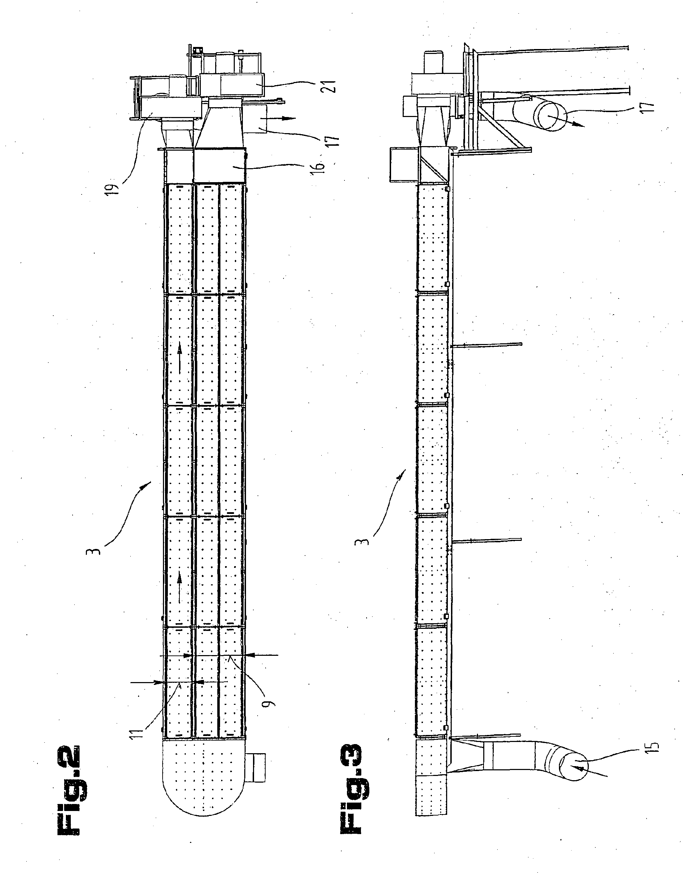

Die heisse feuchte Abluft, die den Trocknungsofen durch das Heissluftrohr 15 verlässt, wird in diesem Beispiel im Gleichstrom mit der zugeführten Frischluft durch den Wärmetauscher 3 geführt und dabei abgefühlt. Natürlich könnte der Wärmetauscher auch im Gegenstrom betrieben werden, jedoch hat der Gleichstrombetrieb der Vorteil, dass sowohl für die aus dem Trocknungsofen 1 austretende, dem Wärmetauscher 3 zugeführte heisse, feuchte Abluft als auch für die aus dem Wärmetauscher 3 austretende, dem Trocknungsofen 1 zugeführte erhitzte trockene Frischluft sehr kurze Leitungen mit wenigen Strömungsumlenkungen benötigt werden. Im Gegensatz dazu wird beim an Hand der Figur 2 beschriebenen Beispiel mit Gegenstrombetrieb die erwärmte Frischluft durch den Kanal 11 zur Auslaufseite des Trocknungsofens 1 zurückgeführt, ohne dass dabei ein weiterer Wärmeaustausch stattfindet.

Im Wärmetauscher 3, beispielsweise an der mit 32 bezeichnete Stelle oder nach dem Wärmetauscher 3, beispielsweise an der mit 33 bezeichneten Stelle wird zur heissen, feuchten Abluft Wasser eingesprüht, das eine tiefere Temperatur hat als die Abluft. Dabei wird die Abluft weiter abgefühlt, wodurch in ihr enthaltenes Wasser kondensiert. Die derart behandelte Abluft wird durch einen Siphon 35 beführt und anschliessend in die Umgebung entlassen, beispielsweise über Dach abgeblasen. Am tiefsten Punkt des Siphons 35 wird die aus erwärmtem Sprühwasser und Kondenswasser gebildete Flüssigkeit abgelassen und in einen Speicher 37 geführt. Auf diese Weise wird sowohl Wärmeenergie aus der Abluft als auch Kondensationsenergie aus dem in der Abluft enthaltenen Wasserdampf als auch Wasser zurückgewonnen. Vom Speicher aus wird das Wasser im Kreislauf als Sprühwasser benutzt. Da durch aus der feuchten Abluft gewonnenes Kondensat die Flüssigkeitsmenge im Speicher zunimmt, besitzt dieser einen Überlauf 38, über den warmes Überschusswasser beispielsweise einem Fernwärmenetz für weitere Prozesse wie z. B. Färben zugeführt wird.

An einer Stelle vor dem Eintritt der erhitzten Frischluft in den Trocknungsofen 1 durch das Frischluftrohr 17 kann optional ein Wärmetauscher 29 eingebaut sein, mit dem die Frischluft weiter aufgeheizt wird. Gespeist wird der Wärmetauscher 29 durch den Speicher 37 verlassendes heisses Wasser. Nach dem Austritt aus dem Wärmetauscher 29 kann das immer noch warme Wasser für weitere Prozesse verwendet werden.

## Patentansprüche

1. Vorrichtung zur Wärmerückgewinnung mit einer Anlage (1) zur thermischen Behandlung einer Warenbahn, wobei die Warenbahn von einem Einlauf (5) zu einem Auslauf (7) durch die Anlage (1) geführt wird, wobei die Vorrichtung einen Luft-Luft-Wärmetauscher (3) umfasst, in welchem heisse Abluft zum Vorwärmen kalter Frischluft aus der Umgebung zirkuliert und die vorgewärmte Frischluft der Anlage (1) zugeführt wird, wobei der Wärmetauscher (3) mindestens zwei Kanäle (9a-9n) umfasst und die Kanäle (9a-9n) sich ununterbrochen vom Bereich des Auslaufs (7) bis in den Bereich des Einlaufs (5) der Anlage (1) erstrecken,
dadurch gekenntzeichnet, dass
die lichte Weite zwischen den seitlichen Wänden (13a,13b) der Kanäle (9a-9n) zwischen 50 und 200 mm, vorzugsweise zwischen 60 und 120 mm beträgt und dass die seitlichen Wände (13a, 13b) der Kanäle (9a-9n) jeweils an den benachbarten Kanal (9) grenzen und mit diesem Kassetten bilden, die vertikal aus dem Wärmetauscher zur Reinigung heraushebbar sind.

2. Vorrichtung nach Anspruch 1, **dadurch gekennzeichnet,**
**dass** die Höhe der Kanäle (9a-9n) ein Vielfaches der Breite der Kanäle (9a-9n) beträgt und die Kanäle hochkant stehende Kassetten bilden.

3. Vorrichtung nach Anspruch 1, **dadurch gekennzeichnet, dass** die Länge der Kanäle (9a-9n) 0,8 bis 1,2 ma1 die Länge der Anlage (1) beträgt.

4. Vorrichtung nach einem der Ansprüche 1 oder 2, **dadurch gekennzeichnet, dass** der Wärmetauscher (3) an der Anlage (1), vorzugsweise oben auf der Anlage (1) montiert ist, dass ein erstes Verbindungsrohr (15), durch das heisse Abluft aus der Anlage (1) dem Wärmetauscher (3) zugeführt wird, beim Einlauf (5) angeordnet ist und/oder dass ein zweites Verbindungsrohr (17) durch das vorgewärmte Frischluft aus dem Wärmetauscher (3) der Anlage zugeführt (1) wird, beim Auslauf (7) angeordnet ist.

5. Verfahren zum Reinigen der Vorrichtung nach einem der Ansprüche 1 bis 4 von in den Kanälen des Wärmetauschers abgesetzten Fasern und/oder Partikeln, **dadurch gekennzeichnet, dass** die Luftgeschwindigkeit in den Kanälen vorübergehend gegenüber der im Normalbetrieb herrschenden Luftgeschwindigkeit erhöht wird, indem die Leistung eines Ventilators erhöht wird und/oder indem parallele Kanäle nacheinander vorübergehend verschlossen werden.

6. Verfahren nach Anspruch 5, **dadurch gekennzeichnet, dass** Wasser in die heisse Abluft eingesprüht wird, um diese zusätzlich abzukühlen und aus dieser kondensiertes Wasser abzuführen.

7. Verfahren nach Anspruch 6, **dadurch gekennzeichnet, dass** das Wasser in die heisse Abluft eingesprüht wird, bevor diese in den Wärmetauscher eintritt.

8. Verfahren nach Anspruch 6, **dadurch gekennzeichnet, dass** das Wasser im Wärmetauscher in die heisse Abluft eingesprüht wird.

9. Verfahren nach Anspruch 6, **dadurch gekennzeichnet, dass** das Wasser in die heisse Abluft eingesprüht wird, nachdem diese den Wärmetauscher verlassen hat.

## Claims

1. A device for recovering heat having a system (1) for the thermal treatment of a material web, wherein the material web is guided from an inlet (5) to an outlet (7) by the system (1), wherein the device comprises an air-air heat exchanger (3), in which hot exhaust air is circulated to preheat cold fresh air from the surroundings and the preheated fresh air is supplied to the system (1), wherein the heat exchanger (3) comprises at least two channels (9a-9n) and the channels (9a-9n) extend continuously from the area of the outlet (7) up into the area of the inlet (5) of the system (1),
**characterized in that**
the clearance width between the side walls (13a, 13b) of the channels (9a-9n) is between 50 and 200 mm, preferably between 60 and 120 mm, and that the side walls (13a, 13b) of the channels (9a-9n) are each adjacent to the neighboring channel (9) and form cassettes with the latter, which cassettes can be lifted out vertically from the heat exchanger for cleaning.

2. The device according to Claim 1, **characterized in that** the height of the channels (9a-9n) is many times the width of the channels (9a-9n) and the channels form cassettes which stand upright.

3. The device according to Claim 1, **characterized in that** the length of the channels (9a-9n) is 0.8 to 1.2 times the length of the system (1).

4. The device according to any one of Claims 1 or 2, **characterized in that** the heat exchanger (3) is mounted on the system (1), preferably on the top of the system (1), that a first connecting pipe (15), through which hot exhaust air is supplied from the system (1) to the heat exchanger (3), is arranged at the inlet (5), and/or that a second connecting pipe (17), through which preheated fresh air is supplied from the heat exchanger (3) to the system, (1) is arranged at the outlet (7).

5. A process for cleaning the device according to any one of Claims 1 to 4 of fibers and/or particles deposited in the channels of the heat exchanger, **characterized in that** the air speed in the channels is temporarily increased with respect to the prevailing air speed during normal operation, **in that** the performance of a fan is increased and/or **in that** parallel channels are temporarily closed one after the other.

6. The process according to Claim 5, **characterized in that** water is sprayed into the hot exhaust air, in order to additionally cool the latter and to conduct condensed water away from the latter.

7. The process according to Claim 6, **characterized in that** the water is sprayed into the hot exhaust air, before the latter enters the heat exchanger.

8. The process according to Claim 6, **characterized in that** the water in the heat exchanger is sprayed into the hot exhaust air.

9. The process according to Claim 6, **characterized in that** the water is sprayed into the hot exhaust air, after the latter has left the heat exchanger.

## Revendications

1. Dispositif de récupération de chaleur avec une installation (1) de traitement thermique d'une bande d'articles, la bande d'articles étant guidée à travers l'installation (1) depuis une entrée (5) vers une sortie (7), le dispositif comprenant un échangeur de chaleur air-air (3) dans lequel de l'air d'échappement très chaud circule pour le préchauffage d'air frais froid en provenance de l'environnement, et l'air frais préchauffé est conduit à l'installation (1), l'échangeur de chaleur (3) comprenant au moins deux canaux (9a-9n), et les canaux (9a-9n) s'étendant de façon continue depuis la zone de la sortie (7) jusque dans la zone de l'entrée (5) de l'installation (1),
**caractérisé en ce que**
la largeur libre entre les parois latérales (13a, 13b) des canaux (9a-9n) est comprise entre 50 et 200 mm, de préférence entre 60 et 120 mm, et **en ce que** les parois latérales (13a, 13b) des canaux (9a-9n) jouxtent respectivement le canal (9) voisin et forment avec celui-ci des cassettes qui peuvent être extraites verticalement de l'échangeur de chaleur pour le nettoyage.

2. Dispositif selon la revendication 1, **caractérisé en ce que** la hauteur des canaux (9a-9n) est égale à un multiple de la largeur des canaux (9a-9n), et **en ce que** les canaux forment des cassettes placées sur chant.

3. Dispositif selon la revendication 1, **caractérisé en ce que** la longueur des canaux (9a-9n) est égale à 0,8 à 1,2 fois la longueur de l'installation (1).

4. Dispositif selon une des revendications 1 ou 2, **caractérisé en ce que** l'échangeur de chaleur (3) est monté sur l'installation (1), de préférence en haut sur l'installation (1), **en ce qu'**un premier tube de raccordement (15), à travers lequel de l'air d'échappement très chaud en provenance de l'installation (1) est conduit vers l'échangeur de chaleur (3), est disposé à l'entrée (5), et/ou **en ce qu'**un deuxième tube de raccordement (17), à travers lequel l'air frais préchauffé en provenance de l'échangeur de chaleur (3) est conduit vers l'installation, est disposé à la sortie (7).

5. Procédé pour nettoyer le dispositif selon une des revendications 1 à 4 de fibres et/ou de particules déposées dans les canaux de l'échangeur de chaleur, **caractérisé en ce que** la vitesse de l'air dans les canaux est augmentée momentanément par rapport à la vitesse de l'air constatée en fonctionnement normal, par le fait que la puissance d'un ventilateur est augmentée et/ou par le fait que des canaux parallèles sont fermés momentanément l'un après l'autre.

6. Procédé selon la revendication 5, **caractérisé en ce que** de l'eau est pulvérisée dans l'air d'échappement très chaud afin de refroidir celui-ci de façon supplémentaire et pour évacuer l'eau condensée de cet air.

7. Procédé selon la revendication 6, **caractérisé en ce que** l'eau est pulvérisée dans l'air d'échappement très chaud avant que celui-ci ne pénètre dans l'échangeur de chaleur.

8. Procédé selon la revendication 6, **caractérisé en ce que** l'eau dans l'échangeur de chaleur est pulvérisée dans l'air d'échappement très chaud.

9. Procédé selon la revendication 6, **caractérisé en ce que** l'eau est pulvérisée dans l'air d'échappement très chaud après que celui-ci a quitté l'échangeur de chaleur.
